(19) Europäisches Patentamt / European Patent Office / Office européen des brevets

(11) **EP 3 270 250 B1**

(12) **EUROPEAN PATENT SPECIFICATION**

(45) Date of publication and mention
of the grant of the patent:
**07.06.2023 Bulletin 2023/23**

(21) Application number: **16197575.0**

(22) Date of filing: **07.11.2016**

(51) International Patent Classification (IPC):
***G05B 23/02*** *(2006.01)*

(52) Cooperative Patent Classification (CPC):
**G05B 23/0283; G05B 23/024;** G05B 2223/06

(54) **METHOD AND SYSTEM FOR REMOTE MONITORING OF POWER GENERATION UNITS**

VERFAHREN UND SYSTEM ZUR FERNÜBERWACHUNG VON WÄRME- UND
STROM-ERZEUGUNGSANLAGEN

PROCÉDÉ ET SYSTÈME DE TÉLÉSURVEILLANCE DE GÉNÉRATEURS D'ÉNERGIE ÉLECTRIQUE
ET DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2016 RU 2016129046**

(43) Date of publication of application:
**17.01.2018 Bulletin 2018/03**

(73) Proprietor: **AO "ROTEK"
115184 Moscow (RU)**

(72) Inventors:
• **NAUMOV, Sergey
Moscow 115184 (RU)**
• **KRYMSKIY, Alexander
Moscow 115184 (RU)**
• **LIFSHITS, Mikhail
Moscow 115184 (RU)**

(74) Representative: **Chimini, Francesco
Jacobacci & Partners S.p.A.
Piazza della Vittoria 11
25122 Brescia (IT)**

(56) References cited:
**US-A1- 2004 002 776**

• **Shunfeng Cheng ET AL: "Multivariate State
Estimation Technique for Remaining Useful Life
Prediction of Electronic Products", , 31
December 2007 (2007-12-31), XP055393616,
Retrieved from the Internet:
URL:http://citeseerx.ist.psu.edu/viewdoc/d
ownload?doi=10.1.1.88.8332&rep=rep1&type=p
df [retrieved on 2017-07-25]**

## Description

## FIELD OF INVENTION

The invention relates to the prediction and remote monitoring system (hereinafter - "PRMS") and its applied method of determination of the condition of power units with gas, steam and hydraulic turbines.

## BACKGROUND

Currently, practically all power generation objects are equipped with advanced APCS systems (automated process control system) . Applied APCS in their nature are not tools for analysis of changes in technical condition although they are mostly used to prevent accidents. Incident and accident statistics indicate that autonomous and integrated power equipment monitoring and diagnostics systems built in APCS are not efficient enough [1].

The monitoring of a technical condition is based on comparison of parameters and criteria values with their limits and rated values and comparison of parameters with reference power characteristics. Such systems function as a set of modules analyzing the performance of various subsystems of the monitored object. For identification of changes in the technical condition and their causes there is employed a labor intensive automated analysis of performance of the monitoring systems with large number of experts. The applied methods are useless in case of unreliable or incomplete information about limits and norms of key process parameters, criteria, relations between parameters. In most of the cases it causes late identification of initial defects, their uncontrolled development when technical condition is functional, and brings the said object to "disfunctional" or "critical" condition. Maintenance procedures usually are performed after tripping of warning or emergency alarms. The equipment defects are identified after its opening which results in "under-repairs" due to an absence of required spares and technical solutions for elimination of faults. Currently, it is important not only to identify the type of technical condition, such as "operative", "partially operative", "critical" but it is also important to track changes in the identified (the first and the second) condition [2]. The most acute task is monitoring of changes in "functional" condition of equipment caused by development of any defect of parts, components and systems of the existing multitude for detection of unwanted trends and prediction of their development for prevention of incidents and accidents.

Currently, there are many solutions implementing the processes of predictive modelling of behaviour of the monitored object for identification of deviations of parameters of its technical condition and prediction of the failure of different components.

There is the device and method for monitoring of technical unit comprising a lot of systems namely power plant units (RU2313815, SIEMENS AKTIENGESELLSCHAFT, 27.12.2007). This patent applied dynamic learning model for prediction of failure of the monitored object, namely, a power unit. The model is based on neuron networks and/or genetic algorithms and is implemented through the application of analysis module which searches in operating parameters or operating and structural parameters of system the relationships between operating parameters or operating or structural parameters using AI methods and integrates identified relationships into a dynamic model as new relationships thereby improving it with regards to improvement of accuracy of prediction of system behaviour and therefore the dynamic model is improvable with regards to improvement of the accuracy of prediction of system behaviour during operation of the system, wherein the analysis module identifies the output data which characterize the immediate and/or future behaviour in the system operation. The disadvantage of this solution is the application of one model and the principle of neuron network which requires both complicated computing facilities and continuous learning determined by the complicated prediction model which prevents from fast and accurate identification of the future interruption of the monitored object operation.

There is the system and method of prediction of life cycle of operation of gas turbine unit (application US20160160762, General Electric Company, 09.06.2016) comprising turbine condition analysis unit determining the condition based on the parameters such as temperature, vibration, etc., which are processed using physical model of the turbine. A weight is assigned to each of the obtained parameters of the monitored object and it is used for monitoring of the operation of the object for further comparison with turbine performance parameters and adjustment of its operation for extension of its lifecycle. This solution does not comprise modelling of the process of operation of the turbine using learning model method based on reference samples of control parameters, namely MSET (Multivariate State Estimation Technique) [3]-[4] which prevents from fast and accurate identification of possible interruption of the performance of the monitored object using online learning of the predictive equipment operation model.

There is the system of online monitoring of the process based on multivariate analysis (patent US8014880, Fisher-Rosemount Systems Inc., 06.09.2011) which analyses the condition of the object based on multivariate model usinga training dataset obtained using sensors and realizes the development of a number of models of current condition of the performance of the equipment and models of normal condition of the equipment for their further comparison. The disadvantage of this solution is the absence of updating of the model depending on the operating mode of the monitored object and the updating of the performance predictive models of the monitored object based on the filtering of the reference sampling built based on the parameters collected from the monitored equipment. Shunfeng Chen et Al, "Multivariate State Estimation Technique for Remaining Useful Life Prediction of Electronic Products", 31 December 2007, discloses another example of prediction of the condition of an object based on a multivariate model.

## SUMMARY

The object of the invention is the development of a new system and its method for remote monitoring and diagnostics of the condition of gas, steam and hydraulic turbines applied for electricity and heat generation and auxiliary equipment (hereinafter - "the monitored objects and elements of the monitored object") which will allow for early identification of the changes in the condition of the objects and for prediction of the failure of both critical elements of the monitored object and the object in the general.

The technical effect is an improvement of the accuracy of prediction of deviation of operating parameters of the monitored object through application of multiple predictive models of the operation of the monitored object and prompt detection of deviation in each model reflecting the operation of the monitored object in the defined mode. The claimed result is achieved through a method of remote monitoring and prediction of the condition of the monitored object, related to turbine units and their parts, according to claim 1.

In another embodiment, the empirical models are statistical and dynamic models.

In another embodiment, for each type of model the sampling rate is set.

In another embodiment, each model is defined by a set of matrix calculated using a MSET method.

In another embodiment, when calculating $T^2$ criteria, the components of disorders are normalized based on average values of discrepancies and their mean quadratic deviations for a reference sample.

In another embodiment, the empirical models are developed for a multitude of different operating modes of monitored object.

In another embodiment, in case of change of the operating mode of the monitored object, the empirical model corresponding to this mode is automatically switched.

In another embodiment, a defect matrix is developed based on the data characterizing the deviations of parameters of monitored object.

In another embodiment, the degree of the impact of disorders is determined for each identified defect based on the defect matrix.

In another embodiment, the degree of the impact is a weight coefficient reflecting the degree of the impact of the disorder on the defect.

In another embodiment, in case of ranking of the disorders the weight coefficients are summed up.

In another embodiment, the defect matrix is updated with collection of data of process parameters of the monitored object.

The claimed technical effect is achieved also through a prediction and remote monitoring systems (PRMS) of process facilities pertaining to turbines and related equipment according to claim 13.

In another embodiment of the claimed system, the data from controllers to lower tier of PRMS are transmitted via LAN.

In another embodiment of the claimed system, the lower tier zone of PRMS is a demilitarized zone organized using firewalls.

In another embodiment of the claimed system, the information is received and transmitted via lower tier zone of PRMS via the said firewalls.

In another embodiment of the claimed system, the data is transmitted from the main server of APCS to the lower tier of PRMS using OPC protocol (OLE for Process Control).

In another embodiment of the claimed system, the Internet is used as data transmission network.

In another embodiment of the claimed system, the information through Internet is transmitted using secured data link.

In another embodiment of the claimed system, the upper tier server is arranged to automatically update empirical models when data is received from the monitored object. In another embodiment of the claimed system, the upper tier server is arranged to transmit information about the condition of the monitored object to remote devices of users.

In another embodiment of the claimed system, the data is transmitted to remote devices of users using wired and/or wireless communication.

In another embodiment of the claimed system, Ethernet LAN is used as wire communication system.

In another embodiment of the claimed system, the following wireless communication systems are selected: Wi-Fi, GSM, WiMax or Multichannel Multipoint Distribution System (MMDS) .

In another embodiment of the claimed system, the data about condition of the monitored object are transmitted using email messages and/ or SMS and /or PUSH-notifications to remote devices of users.

## BRIEF DESCRIPTION OF THE DRAWINGS

Fig. 1 illustrates the architecture of PRMS.
Fig. 2 illustrates the main stages of implementation of the claimed method.
Fig. 3 illustrates the graphic user interface of PRMS.

## DETAILED DESCRIPTION OF INVENTION

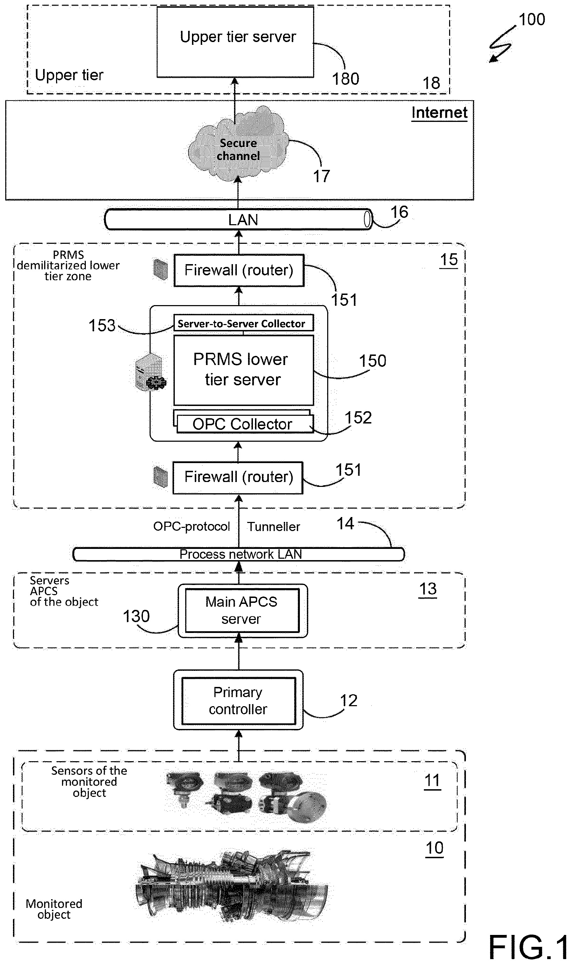

Fig.1 shows the common architecture of the claimed solution namely PRMS (100). PRMS (100) consists of lower (15) and upper (18) tier systems. Both tiers are implemented on servers (150, 180) performing special functions. The task of the lower tier server (150) is collection, primary processing, buffering and transmission of data to the upper tier server (180) whose task is resolution of analytical problems related to monitoring and prediction of technical condition of the monitored objects (10).

Collection and transmission of data is based on two server scheme. Data collection starts at the lower tier, level of monitored (controlled) object (10) where operating parameters are recorded (around 300 parameters) using sensors (11) of power unit with gas, steam turbines and hydraulic turbines (monitored object 10). The readings from sensors (11) of temperature, pressure, flow rate, power, vibration movement and vibration rate, current and voltage, frequency and rpm are transmitted to primary controllers (12) and then are transmitted to the main server of APCS (130).

The lower tier server (150) of PRMS (100) is installed in dedicated cabinet in specialized server room near the existing APCS servers of the object (13). Data from the process network (14) formed using one or several APCS (130) servers are transmitted to PRMS lower tier server (150). Data to lower tier server (150) can be transmitted using OPC (OLE for Process Control) protocol and OPC tunnelling technologies.

PRMS lower tier zone (15) can be designed as a demilitarized zone arranged using firewalls (151) which receive data from APCS (130) and transmit data to the upper tier zone (18). Such scheme isolates the operation of the APCS of the item (130) and lower tier system (15) and ensures integrity of received data in case of abnormal situations.

The process data collected from sensors (11) of the monitored object (10) are transmitted to single storage of the upper tier server (180) . Data is transmitted to the upper tier server (180) using LAN, for example, the Internet. Secured LAN data link can be used for transmission of these data without quality loss in the real time mode using synchronization of lower and (15) upper tier (18) servers (150, 180). Additionally, collection of all data at the upper tier server (180) allows to perform detailed analysis of condition of monitored object by specialists working with the upper tier system (18) which allows these specialists to monitor the condition of all monitored objects (10).

The upper tier server (180) is configured for analytical processing of data in online mode automatically performed by empirical modelling means. Empirical models are built using statistical methods based on sampling of values of process parameters of the item during an operating period assumed as a reference.

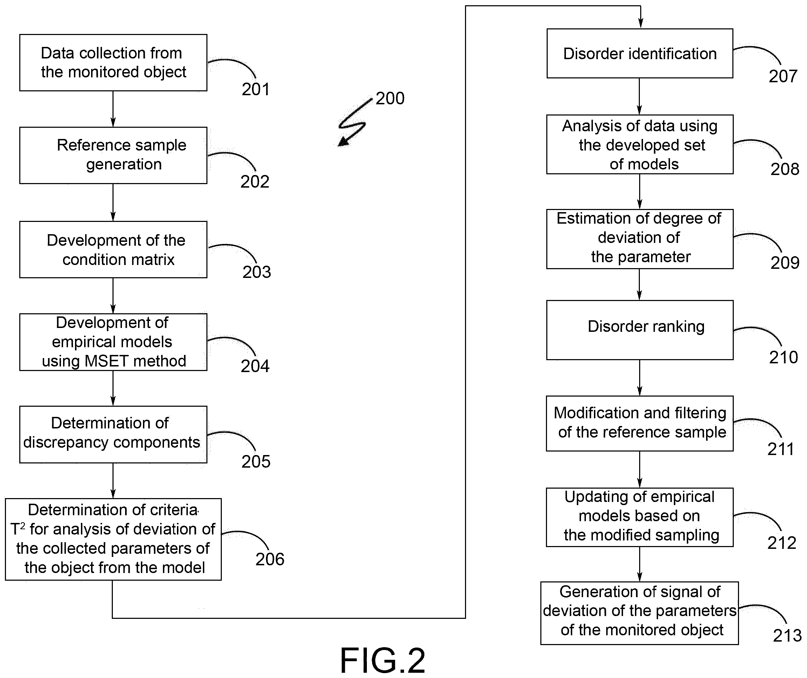

Fig. 2 shows a method (200) which is implemented at the upper tier server (180) for monitoring and analysis of technical condition of the monitored object (10).

At stage (201), the upper tier server (180) collects data characterizing process condition of the monitored object (10) according to readings collected from sensors (11). Empirical models for the prediction of the condition of the monitored object (10) are built using statistical methods based on sampling of values of process parameters of the object (10) during an operating period assumed as a reference. At stage (202), the received parameters of monitored object (10) are used to form a reference sampling of operating parameters of the monitored object (10) consisting of the values of said parameters of process condition of the object (10). Each of the parameters is a point of a sample which corresponds to the time interval of continuous operation of the monitored object.

Then, at stage (203), the matrix of condition is developed from the components of the points of the reference sample where the values of the said operating parameters of the monitored object (10) are used as components.

Then, at stage (204), using MSET (Multivariate State Estimation Technique) method with the matrix of condition obtained at stage (203) the empirical models of prediction of condition of the monitored object are developed and each of these models reflects the observed point of condition of the monitored object in a multivariate space of the object (10) operating parameters at the point which models the condition of the object (10). Using the matrix of condition the respective empirical model is calculated for each point of reference sampling.

In the models built using the MSET method, the measure of the deviation of the behaviour is determined using a conformity - a function estimating the degree of conformity of points of sample. In method MSET, the reference period sample matrix is developed from components of the most characteristic points of reference sample, i.e. points characterizing the parameters which, in case of deviation, can result in the failure of the entire monitored object (10) .

At stage (205), the components of discrepancies are determined based on a difference of components of the observed point and point modelling the condition of the object. The $T^2$ criteria (stage 206) is calculated based on the specific discrepancies components. This criteria characterizes the deviation of the values of process parameters of the monitored object from the model in the observed point of space. Statistic $T^2$ criteria is a quadratic form of normalized discrepancies. The elements of pseudoinverse matrix of correlation matrix for normalized discrepancies of the reference sample are coefficients of this quadratic form. Deviations of models from the reference sampling points (discrepancies) are processed statistically for development of inverse covariance matrices used for calculation of statistical $T^2$ criteria (stage 206) of conformance of process parameters of its model to a random point of space and for calculation of disorders of the components - numeric parameters of the degree of impact of discrepancies of each component on the $T^2$ criteria.

At stage (207), the disorders are determined reflecting the degree of the impact of the parameters of operation of the monitored object (10) on the deviation of the process parameters of the monitored object as a difference of $T^2$ criteria and quadratic forms of normalized discrepancies with coefficients of pseudoinverse matrix for the matrix developed from the correlation matrix, where the line and column corresponding to this indicator of the performance of the object are substituted by zero value.

At stage (208), the analysis of collected information from the monitored object (10) is performed using developed empirical models by comparison of the collected parameters of the monitored object (10) with parameters of model in defined time interval.

Then, at stage (209), using said $T^2$ criteria, the degree of deviation of the collected parameters of the monitored object is determined in the defined time interval from parameters of empirical models and identification of the disorders for such parameters. The decision about deviation in behaviour for the collected process parameters is taken based on the single calculation $T^2$ criteria and the reasons for changes are characterized by a set of calculated disorders. The model has a statistical character and the conclusion about change of technical condition of the object requires detection of clear deviation of $T^2$ criteria from the critical value for a certain time interval (not at separate moments of this interval).

PRMS automatically detects at an early stage in online mode the changes in "functional" technical condition based on deviations of one integral parameter - $T^2$ criteria and localized list of main arguments (process parameters) making the main contribution in the deviation of technical condition from reference statistical model which significantly simplifies the identification of any initiating defect from the existing multitude. The arguments are selected so that they correspond to the main hazard to the technical device and do not mask the initiation of these hazards by less significant problems. Let us consider that

$$x(t_j) = \left[ x_1(t_j) \; x_2(t_j) \; x_3(t_j) \; ... \; x_L(t_j) \right]^T$$

are elements of the sample for time moments $t_j$. Therefore, condition matrix D is determined by ratio:

$$D = \left[ x(t_1) \; x(t_2) \; x(t_3) \; ... \; x(t_M) \right].$$

It consists of the most characteristic points of the sample.

Let $x \otimes y$ designates conformity operation (function of two vectors of process parameters $x$ and $y$).

Then "product"

$$\hat{w} = (D^T \otimes D)^{-1} \cdot (D^T \otimes x_{in}),$$

where character $\otimes$ designates the conformity operation, can be considered as decomposition of measurement vector $x_{in}$ into vectors of training set composing the matrix of conditions. Decomposition vector is rated $\hat{w}$ according to Nadaraya-Watson equation:

$$w = \frac{\hat{w}}{\sum \hat{w}_j}.$$

Using vector w it is possible to estimate "normal" value $x_{est}$ of the measurement vector:

$$x_{est} = D \cdot w,$$

which is a projection of the vector of measurements $x_{in}$ onto space of the "normal" conditions of system determined by matrix D. Therefore, the difference of these vectors (discrepancy)

$$r = x_{est} - x_{in}$$

is the evaluation of disorder of the system, its deviation from normal condition.

The discrepancy is normalized for entire sample

$$\epsilon_i = (r_i - \overline{r_i})/\sigma_i = \left[\left(x_{in_i} - x_{est_i}\right) - \overline{\left(x_{in_i} - x_{est_i}\right)}\right]/\sigma_i \quad ,$$

where $\sigma_i$ are standard deviations of discrepancy for i measurement from its average value.

Let us consider that $\Sigma$ is a covariance matrix for vectors e:

$$\Sigma = \begin{pmatrix} \sigma_1^2 & \sigma_{12} & ... & \sigma_{1L} \\ \sigma_{21} & \sigma_2^2 & ... & \sigma_{2L} \\ ... & ... & ... & ... \\ \sigma_{L1} & \sigma_{L2} & ... & \sigma_L^2 \end{pmatrix} \quad , \qquad \sigma_{ik} \equiv cov(\epsilon_i, \epsilon_k) = \overline{\epsilon_i \epsilon_k}.$$

Then,

$$T^2 = \epsilon^T \Sigma^{-1} \epsilon \quad .$$

Disorder j is calculated using pseudoinverse matrix to the matrix obtained from $\Sigma$ by nulling the j line and column. The similar quadratic form is calculated from this pseudoinverse matrix and deducted from $T^2$. Result - j disorder.

The MSET method also allows to calculate value of $T^2$ criteria for the defined reliability level. If value $T^2$ does not exceed this critical value the decision is taken that the obtained parameters conform with behaviour of the object in the reference period. If the critical value is exceeded, it is considered that the obtained set of parameters does not correspond to the behaviour of the object in the reference period. In this case the ranking of disorders indicates the parameters whose behaviour makes the greatest contribution to the detected changes of the condition of the monitored object (stage 210).

Then, at stage (211), the modification of the reference sample is performed by its replenishment with points for a new time interval and filtration of points corresponding to the operating mode described by the model and corresponding to a new technical condition of the monitored object.

Of all operating parameters whose signals are transmitted from lower tier server of PCMS (150), only those values are selected whose changes can result in changes of the technical condition of the monitored object (10). The development of models comprises development of statistical and dynamic models. Hence, only 100-130 parameters out of 300 are used to develop the model.

Also, there are additional requirements for data arrays required for development of the models:

- for the statistical model, the preferable and sufficient sampling rate is recording of changes of the values once in 10 minutes, while for dynamic model - once per second;
- the amount of archived data assumed as a reference before development of the model should be accumulated during certain time period, for example, during one year of continuous operation of the power unit.

At stage (212), the empirical models are updated based on filtered sampled data and signal is generated informing about deviation of at least one parameter of the monitored object (10) based on the updated model (stage 213).

Thus, the online model characterizes the degree of change of technical condition by single parameter - criteria $T^2$ and determines the degree of impact of deviation for each of the signal received from sensors (11) on the recorded deviation.

The described procedure of processing of signals of the object sensors has a high sensitivity to changes in behaviour of the monitored technical object (10) allowing to identify these changes at early stage and to determine factors which cause these changes.

The most important aspect of the PRMS (100) is the complete automation of detection of changes in technical condition and the list of main parameters making the greatest contribution into the performance of the monitored object (10) ranked by weight which allows to exclude subjective factor both in the online and offline mode during investigation of incidents and accidents based on provided stored data.

The operation of the turbine unit is related to the processes occurring in it in different time scales and with different level of significance for the safe operation of the turbine unit. For example, differential pressure at AFCS filters of the turbine unit changes faster than many other processes, for example, processes that significantly affect vibration. At the same time, the development of the vibration of the monitored object can result in more serious consequences. However, due to faster changes at AFCS filters the signals related to these changes have greater contribution into the $T^2$ criteria masking phenomena that potentially is more hazardous in their effects. For this reason, the above modelling tools are used to determine the disorders with the strongest impact on criteria $T^2$ and the disorders masking the most important signals are identified and removed from the main online model.

To take into account the impact of the removed parameters the auxiliary models and physical modelling modules are used.

The behaviour of the turbine unit under different loads can significantly differ and therefore a set of models is developed, corresponding to different operating modes to model its behaviour instead of one single model. The mode models are automatically switched during online modelling in accordance with changing modes of the monitored object (10). The online models for the following operating modes are developed in PRMS (100):

- Nominal load mode
- Medium load mode
- Low load mode
- Load increase mode
- Load decrease mode
- Startup mode
- Runway mode
- Idle mode
- Barring mode

Models are developed for each of these modes based on the reference period sample data and used for online modelling. The analysis of changes of technical condition and reasons that caused them is performed based on the values of the maximum disorders. The relationships of corresponding signals with time and other signals with the highest disorder values are elaborated.

The detected deviations, implemented arrangements and results are recorded for automation of the analysis of arising problems. Such statistics allows the development of rules for identification of parts and components with expected future problems. The simplest variant of such rules is realized using defects matrix. Each defect is correlated with the resulting disorders (the weight - non-zero number is assigned to the disorder line and defect column in defects matrix). Then, the weights are summed with coefficients of rank of the disorder for the most significant disorders. The highest values of ranking characterize the degree of probability of a defect. The defects matrix is updated based on accumulated statistics. Additional expert applications developed based on empirical and physical models are also important for the analysis of condition of the object. These expert applications consist of regression analysis application, compressor efficiency ratio assessment application and the thermal field epicentre position at the gas turbine exhaust monitoring module.

For parameters with critical values, e.g. for vibration RMS (root mean square) value, the regression analysis allows to estimate the period of reaching the critical values. The regression is calculated with filtering based on the operating mode of the turbine unit.

1.5..3% drop of the compressor efficiency ratio indicates clogging of compressor. Expert module of calculation of efficiency ratio according to the physical model and estimation of the efficiency degradation period to the specified value determines the compressor flushing frequency.

Thermal field epicentre position at the gas turbine exhaust monitoring module allows to compare turbine condition in different time periods based on heterogeneity of distribution of temperatures at the exhaust.

In addition to the main online model of the object, the specific empirical models are developed for specific subsystems of the monitored object. They are used both in online and offline modes. One of such models analyzes the clogging of AFCS filters.

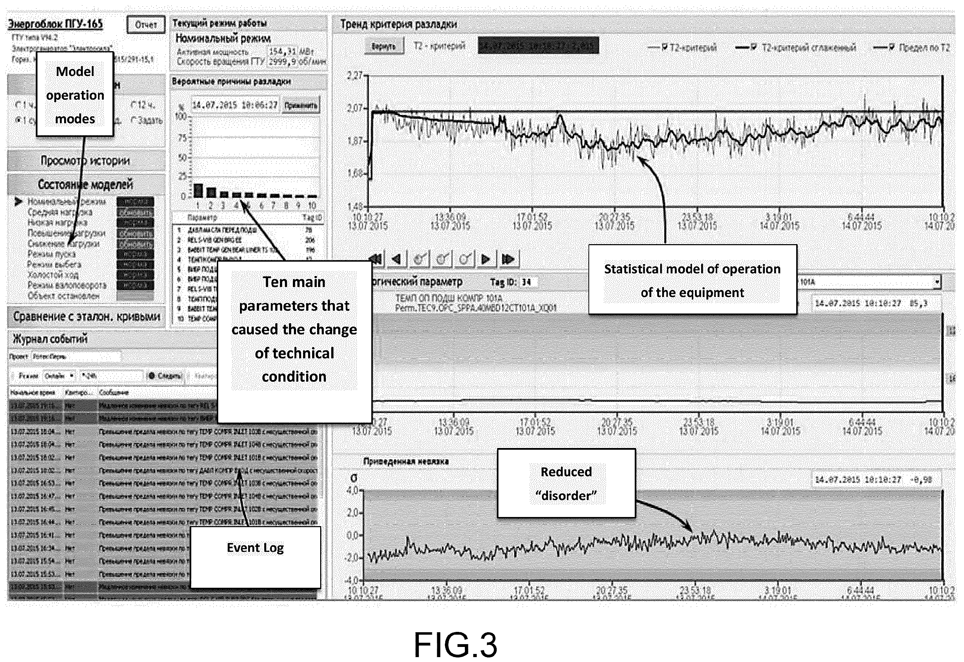

Fig. 3 shows example of PRMS (100) interface which allows to detect in online mode minor deviations in the performance of the turbine unit in advance before critical manifestation.

Collected results are used for generation of notifications for turbine operational staff and for service staff and reports about the technical condition for the required operating periods are prepared.

Required information, namely, after receiving of signals of deviation of the monitored object (10) operation can be transmitted using commonly used wired and wireless communication systems: LAN Ethernet (LAN), Wi-Fi, GSM, WiMax or MMDS (Multichannel Multipoint Distribution System), etc.

Information from upper the tier system (18) of PRMS (100) can be transmitted to various remote computers such as AWS based on IBM PC or mobile devices of system users, for example, smartphones, tablets, laptops receiving data from the upper tier server (180) using emails and/or SMS and/or PUSH-notifications.

The monitoring of the observed object (10) can be performed using standard web browser and Internet portal designed for display of parameters of condition of the monitored object (10). Also, operation monitoring of the observed object (10) can be performed using a special software application installed on the user devices.

Notification about critical condition or necessity of inspection of some elements of the observed object (10), which can become a cause of object's (10) operation power degradation or its failure, will be sent to user devices until the server (180) in response to the sent notifications receives a message that notification was viewed by the user. This function can be implemented by sending emails with defined time intervals or using specialized application or web-portal which in response to the identification of the user related to the system of notification of the upper tier server (180) analyses the status of receipt of the said notification by the said user. The status can be linked to the change of the parameter of the notification on server which can be a record in a database, wherein said record may represent the receipt of a response from the user device.

The provided description of the claimed invention contains the preferable variants of the claimed invention embodiment and should not be construed as limiting another embodiments which do not go beyond the claimed scope of legal protection and which should be clear to those who skilled in the art.

References:

1. V.V. Kudryavyi System disintegration of a system // First industrial electronic mass media RusCable. Ru, ed. No.ФС77 28662. 08.03.2016.
2. E.K. Arakelyan, G.D. Krokhin, V.S. Mukhin Concept of "soft" regulation and maintenance of power units of TPP based on the smart diagnostics // Bulletin of Moscow Power Engineering Institute. 2008. No.1. P. 14-20.
3. N. Zavaljevski, K.C. Gross, Sensor fault detection in nuclear power plants using multivariate state estimation technique and support vector machines // Third Intern. Conf. of the Yugoslav nuclear society. Belgrade, Yugoslavia: Printed in USA by Argonne laboratory. 2000.
4. K.C. Gross MSET. Advanced pattern recognition system for ultra-reliable online instrument surveillance // Argonne national laboratory. 2000.

## Claims

1. A method of remote monitoring and prediction of the condition of a monitored object (10), related to turbine units and their parts, comprising the following stages:

   - collect (201) data from the monitored object (10) characterizing operating parameters of the monitored object;
   - based on the received operating parameters of the monitored object (10), form (202) a reference sample, $x(t_j)$, of operating parameters of the monitored object (10), where

$$x(t_j) = \left[ x_1(t_j)\; x_2(t_j)\; x_3(t_j) \ldots x_L(t_j) \right]^T$$

   the reference sample consisting of the values of the said operating parameters collected at a predefined sampling rate during an operating period assumed as a reference, each of the parameters being an element of the reference sample at a time moment $t_j$;
   - develop (203) a matrix of condition (D) from the values of the elements of the reference sample, wherein

$$D = \left[ x(t_1)\; x(t_2)\; x(t_3) \ldots x(t_M) \right]$$

   - using a Multivariate State Estimation Technique, MSET, method with the matrix of condition (D) to develop (204) an empirical model of prediction of condition of the monitored object, wherein using the model to estimate a vector $x_{est}$ modelling the condition of the monitored object, the vector $x_{est}$ reflects the observed point of the monitored object condition as a point in a multivariate space of the object operating parameters which models the condition of the object:

$$x_{est} = D \cdot w \,,$$

where

$$w = \frac{\widehat{w}}{\sum \widehat{w}_i}$$

and where

$$\widehat{w} = (D^T \otimes D)^{-1} \cdot (D^T \otimes x_{in})$$

$x_{in}$ being a measurement vector of the monitored object and operator "⊗" designating a conformity operation;
- determine (205) components of discrepancies (r) based on the difference of components of the measurement vector $x_{in}$ and the vector $x_{est}$ modelling the condition of the object:

$$r = x_{est} - x_{in},$$

- calculate (206) statistical T$^2$ criteria as

$$T^2 = \epsilon^T \Sigma^{-1} \epsilon$$

where

$$\epsilon_i = (r_i - \overline{r_i})/\sigma_i = \left[ \left( x_{in_i} - x_{est_i} \right) - \overline{\left( x_{in_i} - x_{est_i} \right)} \right] / \sigma_i \ ,$$

where $\sigma_i$ are standard deviations of the discrepancy (r) for measurement i from its average value, and $\Sigma$ is a covariance matrix for vectors ∈:

$$\Sigma = \begin{pmatrix} \sigma_1^2 & \sigma_{12} & \dots & \sigma_{1L} \\ \sigma_{21} & \sigma_2^2 & \dots & \sigma_{2L} \\ \dots & \dots & \dots & \dots \\ \sigma_{L1} & \sigma_{L2} & \dots & \sigma_L^2 \end{pmatrix} \ , \qquad \sigma_{ik} \equiv cov(\epsilon_i, \epsilon_k) = \overline{\epsilon_i \epsilon_k};$$

- determine (207) disorders in the operation of the monitored object, which represent the degree of impact of the operating parameters of the monitored object on the deviation of the condition of the monitored object, wherein each disorder component (j) is determined as a difference of statistical T$^2$ criteria and the quadratic form of the pseudoinverse matrix of a matrix obtained from the covariance matrix ($\Sigma$) by replacing with zero the raw and the column (j) corresponding to the disorder component;
- analyse (208) the collected information from the monitored object using the developed empirical model by comparison of the collected parameters of the monitored object with parameters of the developed empirical model in a defined time interval;
- determine (209), using the statistical T$^2$ criteria, the degree of deviation of the collected parameters of the monitored object in the defined time interval from the parameters of the developed empirical model and identify the disorders for such parameters;
- rank (210) the computed disorders for identification of the operating parameters making the greatest contribution to the change of the condition of the monitored object;
- modify (211) the reference sample by its replenishment with elements for a new time interval of continuous work of the monitored object and by filtration of elements corresponding to the operating mode described by the developed empirical model and corresponding to a new technical condition of the monitored object;
- update (212) the empirical model based on the filtered sample;
and
- generate (213) a signal informing about a deviation of at least one parameter of the monitored object based on the updated model.

2. The method according to claim 1, wherein the empirical model is an empirical statistical or dynamic model.

3. The method according to claim 2, wherein the sampling rate is set for each type of model.

4. The method according to claim 3, wherein each model is determined by a set of matrix calculated using a Multivariate State Estimation Technique, MSET, method.

5. The method according to claim 1, wherein for calculation of the $T^2$ criteria the components of discrepancies are normalized based on average values of discrepancies and their mean quadratic deviations for the reference sample.

6. The method according to claim 1, wherein another empirical model is developed for a different operating mode of the monitored object.

7. The method according to claim 6, wherein in case of change of the operating mode of the monitored object the empirical model corresponding to this mode is automatically switched.

8. The method according to claim 1, wherein a defects matrix is developed based on the data characterizing the deviations of parameters of the monitored object.

9. The method according to claim 8, wherein the degree of the impact of disorders is determined for each identified defect based on the defects matrix.

10. The method according to claim 9, wherein the degree of the impact is a weight coefficient reflecting the degree of the impact of the disorder on the defect.

11. The method according to claim 10, wherein weight coefficients are summed for ranking of disorders.

12. The method according to claim 8, wherein the defects matrix is updated with collection of data of process parameters of the monitored object.

13. A prediction and remote monitoring system, PRMS, of a monitored object (10), related to turbine units and their parts, which comprises:
a group of sensors (11) related with the monitored object (10) and transmitting information about process parameters of said object to primary controllers (12) which are related with a main automated process control system, APCS, server (130) of the monitored object;

- the main automated process control system, APCS, server (130) which is used for accumulation data collected from controllers and subsequent transmission of the said data to a lower tier zone (15) of the prediction and remote monitoring system, PRMS, comprising at least lower tier server (150) of the prediction and remote monitoring system, PRMS, from which via data network (16) the data of process parameters of the monitored object are transmitted to an upper tier zone (18) of the prediction and remote monitoring system, PRMS, which comprises an upper tier server (180) arranged to implement the method of remote monitoring and prediction according to any of claims 1-12.

14. The system according to claim 13, wherein data from controllers to the lower tier zone of the prediction and remote monitoring system, PRMS, are transmitted via LAN (14).

15. The system according to claim 13, wherein the lower tier zone of the prediction and remote monitoring system, PRMS, is a demilitarized zone organized using firewalls (151).

16. The system according to claim 15, wherein information is received and transmitted via the lower tier zone of the prediction and remote monitoring system, PRMS, via the said firewalls.

17. The system according to claim 13, wherein data is transmitted from the main automated process control system, APCS, server (130) to the lower tier zone of the prediction and remote monitoring system, PRMS, using an OLE for Process Control (OPC) protocol.

18. The system according to claim 13, wherein Internet is used as the data transmission network.

19. The system according to claim 18, wherein information through the Internet is transmitted using a secured data link.

20. The system according to claim 13, wherein the upper tier server is arranged to update empirical models automatically when data is received from the monitored objects.

21. The system according to claim 13, wherein the upper tier server is arranged to transmit information about the condition of the monitored object to remote devices of users.

22. The system according to claim 21, wherein the data is transmitted to remote devices of users using wired and/or wireless communication.

23. The system according to claim 22, wherein Ethernet LAN is used as a wired communication type.

24. The system according to claim 22, wherein a wireless communication type is selected from the following group: Wi-Fi, GSM, WiMax or Multichannel Multipoint Distribution System.

25. The system according to claim 22, wherein the data about condition of the monitored object are transmitted using email and/ or SMS and /or PUSH-notifications to the remote devices of users.

**Patentansprüche**

1. Verfahren zur Fernüberwachung und Vorhersage des Zustands bzw. der Bedingung eines überwachten Objekts (10) bezüglich Turbineneinheiten und deren Teile, umfassend die folgenden Stufen bzw. Schritte:

   - Sammeln (201) von Daten von dem überwachten Objekt (10), die Betriebsparameter des überwachten Objekts charakterisieren;
   - basierend auf den empfangenen Betriebsparametern des überwachten Objekts (10), Bilden (202) einer Referenzprobe $x(t_j)$ von Betriebsparametern des überwachten Objekts (10), wo

$$x(t_j) = \left[ x_1(t_j)\ x_2(t_j)\ x_3(t_j) \dots x_L(t_j) \right]^T$$

   die Referenzprobe bestehend aus den Werten der Betriebsparameter, die mit einer vordefinierten Abtastrate während einer Betriebsperiode gesammelt werden, die als Referenz angenommen wird, wobei jeder der Parameter ein Element der Referenzprobe zu einem Zeitpunkt $t_j$ ist;
   - Entwickeln (203) einer Zustands- bzw. Bedingungsmatrix (D) aus den Werten der Elemente der Referenzprobe, wobei

$$D = \left[ x(t_1)\ x(t_2)\ x(t_3) \dots x(t_M) \right]$$

   - Verwenden eines Multivariate State Estimation Technique, MSET,-Verfahrens mit der Zustandsmatrix (D), um ein empirisches Modell zur Vorhersage des Zustands des überwachten Objekts zu entwickeln (204), wobei das Modell verwendet wird, um einen Vektor $x_{est}$ zu schätzen, der den Zustand des überwachten Objekts modelliert, wobei der Vektor $x_{esf}$ den beobachteten Punkt des Zustands des überwachten Objekts als einen Punkt in einem multivariaten Raum der Objektbetriebsparameter widerspiegelt, der den Zustand des Objekts modelliert:

$$x_{est} = D \cdot w \,,$$

wo

$$w = \frac{\widehat{w}}{\sum \widehat{w}_j}$$

und wo

$$\widehat{w} = (D^T \otimes D)^{-1} \cdot (D^T \otimes x_{in})$$

wobei $x_{in}$ ein gemessener Vektor bzw. Messvektor des überwachten Objekts ist und ein Operator"$\otimes$" eine Konformitätsoperation bezeichnet;
- Bestimmen (205) von Diskrepanzkomponenten (r) basierend auf der Differenz von Komponenten des Messvektors $x_{in}$ und des Vektors $x_{est}$, der den Zustand des Objekts modelliert:

$$r = x_{est} - x_{in},$$

- Berechnen (206) statistischer T$^2$-Kriterien als

$$T^2 = \epsilon^T \Sigma^{-1} \epsilon$$

wo

$$\epsilon_i = (r_i - \overline{r_i})/\sigma_i = \left[ (x_{in_i} - x_{est_i}) - \overline{(x_{in_i} - x_{est_i})} \right]/\sigma_i \ ,$$

wobei $\sigma_i$ die Standardabweichungen der Diskrepanz (r) für die Messung i von ihrem Mittelwert sind, und $\Sigma$ eine Kovarianzmatrix für Vektoren $\epsilon$ ist:

$$\Sigma = \begin{pmatrix} \sigma_1^2 & \sigma_{12} & ... & \sigma_{1L} \\ \sigma_{21} & \sigma_2^2 & ... & \sigma_{2L} \\ ... & ... & ... & ... \\ \sigma_{L1} & \sigma_{L2} & ... & \sigma_L^2 \end{pmatrix} \quad , \qquad \sigma_{ik} \equiv cov(\epsilon_i, \epsilon_k) = \overline{\epsilon_i \epsilon_k};$$

- Bestimmen (207) von Störungen im Betrieb des überwachten Objekts, die den Grad der Auswirkung der Betriebsparameter des überwachten Objekts auf die Abweichung des Zustands des überwachten Objekts darstellen, wobei jede Störungskomponente (j) bestimmt wird als eine Differenz von statistischen T$^2$-Kriterien und der quadratischen Form der pseudoinversen Matrix einer Matrix, die aus der Kovarianzmatrix ($\Sigma$) erhalten wird, indem die Rohdaten und die Spalte (j), die der Störungskomponente entsprechen, durch Null ersetzt werden;
- Analysieren (208) der gesammelten Informationen von dem überwachten Objekt unter Verwendung des entwickelten empirischen Modells durch Vergleich der gesammelten Parameter des überwachten Objekts mit Parametern des entwickelten empirischen Modells in einem definierten Zeitintervall;
- Bestimmen (209), unter Verwendung der statistischen T$^2$-Kriterien, des Grads der Abweichung der gesammelten Parameter des überwachten Objekts in dem definierten Zeitintervall von den Parametern des entwickelten empirischen Modells und Identifizieren der Störungen für solche Parameter;
- Einstufen (210) der berechneten Störungen zur Identifizierung der Betriebsparameter, die den größten Beitrag zur Änderung des Zustands des überwachten Objekts leisten;
- Modifizieren (211) der Referenzprobe durch Auffüllen derselben mit Elementen für ein neues Zeitintervall kontinuierlicher Arbeit des überwachten Objekts und durch Filtern von Elementen entsprechend dem durch das entwickelte empirische Modell beschriebenen Betriebsmodus und entsprechend einem neuen technischen Zustand des überwachten Objekts;
- Aktualisieren (212) des empirischen Modells basierend auf der gefilterten Probe; und
- Erzeugen (213) eines Signals, das über eine Abweichung von zumindest einem Parameter des überwachten Objekts informiert, basierend auf dem aktualisierten Modell.

2. Verfahren nach Anspruch 1, wobei das empirische Modell ein empirisches statistisches oder dynamisches Modell ist.

3. Verfahren nach Anspruch 2, wobei die Abtastrate für jeden Modelltyp festgelegt wird.

4. Verfahren nach Anspruch 3, wobei jedes Modell durch einen Satz von Matrizen bestimmt wird, die unter Verwendung eines Multivariate State Estimation Technique,MSET,-Verfahrens berechnet werden.

5. Verfahren nach Anspruch 1, wobei zur Berechnung der $T^2$-Kriterien die Diskrepanzkomponenten basierend auf Mittelwerten der Diskrepanzen und deren mittleren quadratischen Abweichungen für die Referenzprobe normiert werden.

6. Verfahren nach Anspruch 1, wobei ein anderes bzw. weiteres empirisches Modell für einen unterschiedlichen Betriebsmodus des überwachten Objekts entwickelt wird.

7. Verfahren nach Anspruch 6, wobei bei einer Änderung des Betriebsmodus des überwachten Objekts automatisch das diesem Modus entsprechende empirische Modell umgeschaltet wird.

8. Verfahren nach Anspruch 1, wobei eine Fehlermatrix basierend auf den Daten entwickelt wird, die die Abweichungen von Parametern des überwachten Objekts charakterisierenden.

9. Verfahren nach Anspruch 8, wobei der Grad der Auswirkung der Störungen für jeden identifizierten Fehler basierend auf der Fehlermatrix ermittelt wird.

10. Verfahren nach Anspruch 9, wobei der Grad der Auswirkung ein Gewichtungskoeffizient ist, der den Grad der Auswirkung der Störung auf den Fehler widerspiegelt.

11. Verfahren nach Anspruch 10, wobei Gewichtungskoeffizienten zum Einstufen von Störungen summiert werden.

12. Verfahren nach Anspruch 8, wobei die Fehlermatrix mit dem Sammeln von Daten von Prozessparametern des überwachten Objekts aktualisiert wird.

13. Vorhersage- und Fernüberwachungssystem, PRMS, eines überwachten Objekts (10) bezüglich Turbineneinheiten und deren Teile, das umfasst:

eine Gruppe von Sensoren (11), die mit dem überwachten Objekt (10) verbunden sind und Informationen über Prozessparameter des Objekts an primäre Steuer- bzw. Regeleinrichtungen (12) übertragen, die mit einem Automatisiertes-Hauptprozesssteuer- bzw. -regelsystem,APCS,-Server (130) des überwachten Objekts verbunden sind;
wobei der Automatisiertes-Hauptprozesssteuer- bzw. -regelsystem,APCS,-Server (130), der zum Erfassen bzw. Akkumulieren von Daten, die von Steuer- bzw. Regeleinrichtungen gesammelt werden, und zum anschließenden Übertragen der Daten an eine Lower-Tier-Zone (15) des Vorhersage- und Fernüberwachungssystems, PRMS, verwendet wird, das zumindest einen Lower-Tier-Server (150) des Vorhersage- und Fernüberwachungssystems PRMS, umfasst, von dem über ein Datennetz (16) die Daten von Prozessparametern des überwachten Objekts an eine Upper-Tier-Zone (18) des Vorhersage- und Fernüberwachungssystems übertragen werden, PRMS, das einen Upper-Tier-Server (180) umfasst, der angeordnet ist, das Verfahren zur Fernüberwachung und Vorhersage nach einem der Ansprüche 1-12 zu implementieren.

14. System nach Anspruch 13, wobei Daten von Steuer- bzw. Regeleinrichtungen zu der Lower-Tier-Zone des Vorhersage- und Fernüberwachungssystems, PRMS, über LAN (14) übertragen werden.

15. System nach Anspruch 13, wobei die Lower-Tier-Zone des Vorhersage- und Fernüberwachungssystems, PRMS, eine demilitarisierte Zone ist, die unter Verwendung von Firewalls (151) organisiert ist.

16. System nach Anspruch 15, wobei Informationen über die Lower-Tier-Zone des Vorhersage- und Fernüberwachungssystems, PRMS, über die Firewalls empfangen und übertragen werden.

**17.** System nach Anspruch 13, wobei Daten von dem Automatisiertes-Hauptprozesssteuer- bzw. -regelsystem, APCS, -Server (130) an die Lower-Tier-Zone ne des Vorhersage- und Fernüberwachungssystems, PRMS, unter Verwendung eines OLE for Process Control(OPC)-Protokolls übertragen werden.

**18.** System nach Anspruch 13, wobei als Datenübertragungsnetz das Internet verwendet wird.

**19.** System nach Anspruch 18, wobei Informationen über das Internet unter Verwendung einer gesicherten Datenverbindung übertragen werden.

**20.** System nach Anspruch 13, wobei der Lower-Tier-Server angeordnet ist, empirische Modelle automatisch zu aktualisieren, wenn Daten von den überwachten Objekten empfangen werden.

**21.** System nach Anspruch 13, wobei der Upper-Tier-Server angeordnet ist, um Informationen über den Zustand des überwachten Objekts an entfernte Vorrichtungen von Benutzern zu übertragen.

**22.** System nach Anspruch 21, wobei die Daten unter Verwendung von drahtgebundener und/oder drahtloser Kommunikation an entfernte Vorrichtungen von Benutzern übertragen werden.

**23.** System nach Anspruch 22, wobei Ethernet-LAN als ein drahtgebundener Kommunikationstyp verwendet wird.

**24.** System nach Anspruch 22, wobei ein drahtloser Kommunikationstyp aus der folgenden Gruppe ausgewählt ist: Wi-Fi, GSM, WiMax oder Multichannel Multipoint Distribution System.

**25.** System nach Anspruch 22, wobei die Daten über den Zustand des überwachten Objekts unter Verwendung von E-Mail und/oder SMS und/oder PUSH-Benachrichtigungen an die entfernten Vorrichtungen von Benutzern übertragen werden.

**Revendications**

**1.** Procédé de surveillance et de prédiction à distance de la condition d'un objet surveillé (10) associé à des unités de turbine et à leurs parties, comprenant les étapes suivantes :

- collecter (201) des données à partir de l'objet surveillé (10) caractérisant des paramètres de fonctionnement de l'objet surveillé ;
- sur la base des paramètres de fonctionnement reçus de l'objet surveillé (10), former (202) un échantillon de référence $x(t_j)$ de paramètres de fonctionnement de l'objet surveillé (10), où

$$x(t_j) = [x_1(t_j) \ x_2(t_j) \ x_3(t_j) \ \ldots \ x_L(t_j)]^T$$

l'échantillon de référence étant constitué des valeurs desdits paramètres de fonctionnement collectés à une fréquence d'échantillonnage prédéfinie pendant une période de fonctionnement supposée être une référence, chacun des paramètres étant un élément de l'échantillon de référence à un instant $t_j$ ;
- développer (203) une matrice de conditions (D) à partir des valeurs des éléments de l'échantillon de référence, dans lequel

$$D = [x(t_1) \ x(t_2) \ x(t_3) \ \ldots \ x(t_M)]$$

- utiliser un procédé à technique d'estimation d'état multivariable, MSET, avec la matrice de conditions (D) pour développer (204) un modèle empirique de prédiction de condition de l'objet surveillé, dans lequel, en utilisant le modèle pour estimer un vecteur $x_{est}$ modélisant la condition de l'objet surveillé, le vecteur $x_{est}$ reflète le point observé de la condition d'objet surveillé comme un point dans un espace multivarié des paramètres de fonctionnement d'objet qui modélise la condition de l'objet :

$$x_{est} = D \cdot w,$$

où

$$w = \frac{\widehat{w}}{\sum \widehat{w}_j}$$

et où

$$\widehat{w} = (D^T \otimes D)^{-1} \cdot (D^T \otimes x_{in})$$

$x_{in}$ étant un vecteur de mesure de l'objet surveillé et l'opérateur "$\otimes$" désignant une opération de conformité ;
- déterminer (205) des composantes d'anomalies (r) sur la base de la différence de composantes du vecteur de mesure $x_{in}$ et du vecteur $x_{est}$ modélisant la condition de l'objet :

$$r = x_{est} - x_{in},$$

- calculer (206) des critères statistiques $T^2$ comme

$$T^2 = \epsilon^T \sum{}^{-1} \epsilon$$

où

$$\epsilon_i = (r_i - \bar{r}_i)/\sigma_i = \left[ (x_{in_i} - x_{est_i}) - \overline{(x_{in_i} - x_{est_i})} \right] /\sigma_i,$$

où $\sigma_i$ sont des écarts types de l'anomalie (r) pour la mesure i par rapport à sa valeur moyenne, et $\Sigma$ est une matrice de covariance pour les vecteurs $\epsilon$ :

$$\Sigma = \begin{pmatrix} \sigma_1^2 & \sigma_{12} & \cdots & \sigma_{1L} \\ \sigma_{21} & \sigma_2^2 & \cdots & \sigma_{2L} \\ \cdots & \cdots & \cdots & \cdots \\ \sigma_{L1} & \sigma_{L2} & \cdots & \sigma_L^2 \end{pmatrix}, \sigma_{ik} \equiv cov(\epsilon_i, \epsilon_k) = \overline{\epsilon_i \epsilon_k} \; ;$$

- déterminer (207) des désordres dans le fonctionnement de l'objet surveillé, qui représentent le degré de l'effet des paramètres de fonctionnement de l'objet surveillé sur l'écart de la condition de l'objet surveillé, dans lequel chaque composante de désordre (j) est déterminée comme une différence de critères statistiques $T^2$ et de la forme quadratique de la matrice pseudo-inverse d'une matrice obtenue à partir de la matrice de covariance ($\Sigma$) en remplaçant par zéro la rangée et la colonne (*j*) correspondant à la composante de désordre ;
- analyser (208) les informations collectées à partir de l'objet surveillé en utilisant le modèle empirique développé en comparant les paramètres collectés de l'objet surveillé avec des paramètres du modèle empirique développé dans un intervalle de temps défini ;
- déterminer (209), en utilisant les critères statistiques $T^2$, le degré de l'écart des paramètres collectés de l'objet surveillé dans l'intervalle de temps défini par rapport aux paramètres du modèle empirique développé et identifier les désordres pour ces paramètres ;
- classer (210) les désordres calculés pour l'identification des paramètres de fonctionnement contribuant le plus au changement de la condition de l'objet surveillé ;
- modifier (211) l'échantillon de référence en le réapprovisionnant en éléments pour un nouvel intervalle de temps de travail continu de l'objet surveillé et en filtrant des éléments correspondant au mode de fonctionnement décrit par le modèle empirique développé et correspondant à une nouvelle condition technique de l'objet surveillé ;
- mettre à jour (212) le modèle empirique sur la base de l'échantillon filtré ; et
- générer (213) un signal informant d'un écart d'au moins un paramètre de l'objet surveillé sur la base du modèle mis à jour.

**2.** Procédé selon la revendication 1, dans lequel le modèle empirique est un modèle empirique statistique ou dynamique.

**3.** Procédé selon la revendication 2, dans lequel la fréquence d'échantillonnage est fixée pour chaque type de modèle.

**4.** Procédé selon la revendication 3, dans lequel chaque modèle est déterminé par un ensemble de matrices calculées en utilisant un procédé à technique d'estimation d'état multivariable, MSET.

**5.** Procédé selon la revendication 1, dans lequel, pour le calcul des critères $T^2$, les composantes d'anomalies sont normalisées sur la base de valeurs moyennes d'anomalies et de leurs écarts quadratiques moyens pour l'échantillon de référence.

**6.** Procédé selon la revendication 1, dans lequel un autre modèle empirique est développé pour un mode de fonctionnement différent de l'objet surveillé.

**7.** Procédé selon la revendication 6, dans lequel en cas de changement du mode de fonctionnement de l'objet surveillé, le modèle empirique correspondant à ce mode est automatiquement commuté.

**8.** Procédé selon la revendication 1, dans lequel une matrice de défauts est développée sur la base des données caractérisant les écarts de paramètres de l'objet surveillé.

**9.** Procédé selon la revendication 8, dans lequel le degré de l'effet des désordres est déterminé pour chaque défaut identifié sur la base de la matrice de défauts.

**10.** Procédé selon la revendication 9, dans lequel le degré de l'effet est un coefficient de pondération reflétant le degré de l'effet du désordre sur le défaut.

**11.** Procédé selon la revendication 10, dans lequel les coefficients de pondération sont additionnés pour le classement des désordres.

**12.** Procédé selon la revendication 8, dans lequel la matrice de défauts est mise à jour avec la collecte de données de paramètres de traitement de l'objet surveillé.

**13.** Système de prédiction et de surveillance à distance, PRMS, d'un objet surveillé (10) associé à des unités de turbine et à leurs parties, qui comprend :
un groupe de capteurs (11) associés à l'objet surveillé (10) et transmettant des informations sur des paramètres de traitement dudit objet à des dispositifs de commande primaires (12) qui sont associés à un serveur de système de commande de traitement automatisé principal, APCS, (130) de l'objet surveillé ;

- le serveur de système de commande de traitement automatisé principal, APCS, (130) qui est utilisé pour l'accumulation de données collectées à partir de dispositifs de commande et la transmission ultérieure desdites données à une zone de niveau inférieur (15) du système de prédiction et de surveillance à distance, PRMS, comprenant au moins un serveur de niveau inférieur (150) du système de prédiction et de surveillance à distance, PRMS, à partir duquel les données de paramètres de traitement de l'objet surveillé sont transmises via un réseau de données (16) à une zone de niveau supérieur (18) du système de prédiction et de surveillance à distance, PRMS, qui comprend un serveur de niveau supérieur (180) agencé pour mettre en oeuvre le procédé de surveillance et de prédiction à distance selon l'une quelconque des revendications 1 à 12.

**14.** Système selon la revendication 13, dans lequel des données sont transmises via un LAN (14) des dispositifs de commande à la zone de niveau inférieur du système de prédiction et de surveillance à distance, PRMS.

**15.** Système selon la revendication 13, dans lequel la zone de niveau inférieur du système de prédiction et de surveillance à distance, PRMS, est une zone démilitarisée organisée en utilisant des pare-feu (151).

**16.** Système selon la revendication 15, dans lequel des informations sont reçues et transmises via la zone de niveau inférieur du système de prédiction et de surveillance à distance, PRMS, via lesdits pare-feu.

**17.** Système selon la revendication 13, dans lequel des données sont transmises du serveur de système de commande de traitement automatisé principal, APCS, (130) à la zone de niveau inférieur du système de prédiction et de surveillance à distance, PRMS, en utilisant un protocole OLE pour la commande de traitement (OPC).

18. Système selon la revendication 13, dans lequel Internet est utilisé comme réseau de transmission de données.

19. Système selon la revendication 18, dans lequel des informations par Internet sont transmises en utilisant une liaison de données sécurisée.

20. Système selon la revendication 13, dans lequel le serveur de niveau supérieur est agencé pour mettre à jour automatiquement des modèles empiriques lorsque des données sont reçues des objets surveillés.

21. Système selon la revendication 13, dans lequel le serveur de niveau supérieur est agencé pour transmettre des informations sur la condition de l'objet surveillé à des dispositifs distants d'utilisateurs.

22. Système selon la revendication 21, dans lequel les données sont transmises à des dispositifs distants d'utilisateurs en utilisant une communication filaire et/ou sans fil.

23. Système selon la revendication 22, dans lequel un LAN Ethernet est utilisé comme type de communication filaire.

24. Système selon la revendication 22, dans lequel un type de communication sans fil est choisi dans le groupe suivant : Wi-Fi, GSM, WiMax ou système de distribution multipoint multicanal.

25. Système selon la revendication 22, dans lequel les données sur une condition de l'objet surveillé sont transmises par courrier électronique et/ou par SMS et/ou par notifications PUSH aux dispositifs distants d'utilisateurs.

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2313815
- US 20160160762 A
- US 8014880 B

### Non-patent literature cited in the description

- **SHUNFENG CHEN et al.** *Multivariate State Estimation Technique for Remaining Useful Life Prediction of Electronic Products,* 31 December 2007
- System disintegration of a system. **V.V. KUDRYAVYI.** First industrial electronic mass media RusCable. 08 March 2016
- **E.K. ARAKELYAN ; G.D. KROKHIN ; V.S. MUKHIN.** Concept of ''soft'' regulation and maintenance of power units of TPP based on the smart diagnostics. *Bulletin of Moscow Power Engineering Institute,* 2008, (1), 14-20
- **N. ZAVALJEVSKI ; K.C. GROSS.** Sensor fault detection in nuclear power plants using multivariate state estimation technique and support vector machines. *Third Intern. Conf. of the Yugoslav nuclear society,* 2000
- **K.C. GROSS.** Advanced pattern recognition system for ultra-reliable online instrument surveillance. *Argonne national laboratory,* 2000